(19) Europäisches Patentamt
European Patent Office
Office européen des brevets

(11) **EP 4 447 148 A1**

(12) **EUROPEAN PATENT APPLICATION**

(43) Date of publication:
**16.10.2024  Bulletin 2024/42**

(21) Application number: **23167920.0**

(22) Date of filing: **14.04.2023**

(51) International Patent Classification (IPC):
**H01M 4/139** (2010.01)        **H01M 4/62** (2006.01)
**H01M 10/0562** (2010.01)        **H01M 4/88** (2006.01)

(52) Cooperative Patent Classification (CPC):
**H01M 4/139; H01M 4/623; H01M 4/8857;
H01M 4/8882; H01M 10/0562**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ARKEMA FRANCE
92700 Colombes (FR)**

(72) Inventors:
• FUKUYAMA, Mr Takehiro
**OSAKA, 562-0041 (JP)**
• MARCHAL, Lauréline
**69491 PIERRE-BENITE CEDEX (FR)**

(74) Representative: **Arkema Patent
Arkema France
DRD-DPI
420, rue d'Estienne d'Orves
92705 Colombes Cedex (FR)**

(54) **COMPOSITIONS FOR LITHIUM-ION BATTERY ELECTRODES, ELECTRODES AND BATTERIES USING SAID COMPOSITIONS**

(57)    The present invention relates to a composition comprising at least one fluorinated polymer **P1**, a liquid medium **L1**, at least one powdery electrode material, optionally at least one conductive additive, and optionally at least one alkali metal salt; wherein said at least one fluorinated polymer **P1** has a crystallization ratio lower than or equal to 30% and said liquid medium **L1** has an octanol-water partition coefficient greater than 2.

## Description

## Technical field

The present invention relates to a composition for preparing components for use in secondary batteries. In particular, the present invention relates to a process for preparing electrodes and/or separators for use un secondary batteries.

## Technical background of the invention

Lithium batteries, including lithium metal batteries, lithium-ion batteries, lithium polymer batteries, and lithium-ion polymer batteries are finding increased use due to higher voltages and higher energy densities than those of conventional batteries (such as Ni-MH batteries).

An elementary cell of a Li-ion storage battery or lithium battery comprises an anode (at discharge), and a cathode (likewise at discharge) generally made of a lithium insertion compound of metal oxide type, such as $LiMn_2O_4$, $LiCoO_2$ or $LiNiO_2$, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge.

In particular, a secondary battery is a battery that can convert a decrease in a chemical energy accompanying a chemical reaction into an electrical energy to be able to discharge, and, in addition thereto, when an electric current is flowed in a direction reversal to that during discharge, can convert an electrical energy into a chemical energy to be able to store (charge). Among secondary batteries, a lithium-ion secondary battery has a high energy density; accordingly, it is broadly used as a power source of portable devices such as a laptop computer, a portable telephone and so on. For their part, the electrodes generally comprise at least one current collector on which is coated, in the form of a film, a composite material consisting of a so-called active material because it has an electrochemical activity with respect to lithium, a polymer which acts as a binder, plus one or more electronically conductive additives which are generally carbon black or acetylene black, and optionally a surfactant.

Vinylidene fluoride (VDF) resins are endowed with outstanding mechanical properties within a broad range of temperature and excellent resistance to high temperature, to organic solvents and to various chemically aggressive environments. Thanks to their properties, these resins are advantageously used for manufacturing articles such as electrodes and/or separators for use in secondary batteries, especially in Lithium-ion batteries.

For instance, US 2002/0197536 discloses a polymeric electrolyte for use in Lithium batteries comprising a vinylidene fluoride (VDF) copolymer with hexafluoropropylene or a copolymer further comprising recurring units of at least one compound selected from the group consisting of acrylic acid and maleic acid monoalkylester. Representative embodiments of this document relate to electrolytic solutions of these copolymers in N-methyl-2-pyrrolidone. Also, EP 1621573 discloses porous membranes prepared by a composition comprising a vinylidene fluoride (VDF) copolymer with 0.01-10% by moles of a monomer having at least one group selected from an epoxy, a hydroxyl, a carboxyl, an ester, an amide and an acid anhydride group, a plasticizer and a suitable solvent. Representative embodiments of this document relate to hollow porous fiber membranes prepared by compositions of these copolymers in N-methyl-2-pyrrolidone.

Lithium-ion battery electrodes are usually prepared by casting and drying a slurry on current collectors. The slurry consists of active materials, conductive agents and binders where PVDF is the most regularly used binder for cathodes in both industries and laboratories. A typical process includes dissolution of PVDF in n-methyl-2-pyrrolidinone, which is known as a toxic solvent. N-methyl-2-pyrrolidinone is also known to absorb moisture which would cause lithium extraction and decrease electrode capacity. Use of solvents with very low moisture absorbance is also key in obtaining the full performance of active materials.

There is thus still a need in the art for compositions and a process for manufacturing components of a secondary battery such as electrodes and/or separators made of VDF polymers which advantageously enables avoiding use of toxic and polluting solvents and thus eliminating cost, safety and environmental concerns related to handling of large volume of said solvents.

## Summary of the invention

In a first aspect, the present invention pertains to a composition comprising at least one fluorinated polymer **P1,** a liquid medium **L1,** at least one powdery electrode material, optionally at least one conductive additive, and optionally at least one alkali metal salt; wherein said at least one fluorinated polymer **P1** has a crystallization ratio lower than or equal to 30% and said liquid medium **L1** has an octanol-water partition coefficient greater than 2.

Using a fluorinated polymer **P1** having the above-mentioned crystallization ratio allows the dissolution thereof in various liquid medium **L1** that are less toxic and have very low moisture absorbance. In particular, liquid medium **L1** that can dissolve, and not only disperse, said fluorinated polymer **P1** has an octanol-water partition coefficient greater than 2. It is also important that the fluorinated polymer **P1** is dissolved in the liquid medium **L1** and not only disperse. It allows a better efficiency of the electrode and the battery prepared therewith.

In a preferred embodiment, said at least one fluorinated polymer **P1** is selected from the group consisting of poly(vinylidene fluoride) homopolymers and copolymers of vinylidene difluoride with at least one comonomer **M1** selected from the group consisting of vinyl fluoride, tetrafluoroethylene, hexafluoropropylene, 3,3,3-trifluoropropene, 2,3,3,3-tetrafluoropropene, 1,3,3,3-tetrafluoropropene, hexafluoroisobutylene, perfluorobutylethylene, 1,1,3,3,3-pentafluoropropene, 1,2,3,3,3-pentafluoropropene, perfluoro(propyl vinyl ether), perfluoro(methyl vinyl ether), perfluoro(ethyl vinyl ether), trifluoroéthylène, bromotrifluoroethylene, chlorofluoroethylene, chlorotrifluoroethylene, chlorotrifluoropropene, ethylene and mixtures thereof.

In a preferred embodiment, said liquid medium **L1** comprises at least one solvent selected from the group consisting of esters of formula $R^1CO_2R^2$ wherein $R^1$ and $R^2$ are independently selected from the group consisting of $C_1$-$C_{15}$ alkyl, $C_6$-$C_{15}$ aryl, $C_3$-$C_{15}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

In a preferred embodiment, said liquid medium **L1** is anhydrous or substantially anhydrous.

In a preferred embodiment, said at least one powdery electrode material is selected from oxide or sulfide inorganic compounds.

In a preferred embodiment, said composition contains at least one conductive agent selected from the group consisting of carbon blacks, graphites, which are natural or synthetic, carbon fibers, carbon nanotubes, metal fibers and powders, and conductive metal oxides.

In another aspect, the present invention relates to a process for preparing an electrode comprising the steps of:

> i. Providing a composition according to the present invention;
> ii. Processing said composition to provide a film.

In a preferred embodiment, the step ii) is carried out by casting said composition on a substrate, preferably a current collector, and drying the resulting component to form said film on said substrate.

In a preferred embodiment, the film has a content of liquid medium **L1** of from 0.1 ppm to 1% by weight based on the total weight of the film.

In another aspect, the present invention relates to an electrode comprising a film made of a composition according to the present invention.

In another aspect, the present invention pertains to all solid-state battery comprising an electrode according to the present invention and a solid electrolyte.

## Detailed description of the invention

The invention is now described in more detail and in a nonlimiting way in the description which follows. According to various implementations, said binder comprises the following features, in combination where appropriate. The contents indicated are expressed by weight, unless otherwise indicated. For all the indicated ranges, the limits are included unless otherwise indicated.

In a first aspect of the present invention, a composition is provided.

### Composition

The present composition comprises at least one fluorinated polymer **P1**, a liquid medium **L1** and at least one powdery electrode material. In a preferred embodiment, said at least one fluorinated polymer **P1** has a crystallization ratio lower than or equal to 30%, advantageously lower than or equal to 28%, preferably lower than or equal to 26%, more preferably lower than or equal to 24%, in particular lower than or equal to 22%, more particularly lower than or equal to 20%, in a privileged manner lower than or equal to 18%, in a advantageously privileged manner lower than or equal to 16%, in a preferably privileged manner lower than or equal to 14%, in a particularly privileged manner lower than or equal to 12%.

The crystallization ratio of the polymer **P1** is calculated from [the heat of fusion (J/g) of the polymer **P1**]/104.6 (J/g). If said at least one fluorinated polymer **P1** is a mixture of several fluorinated polymer **P1** as described hereunder, each fluorinated polymer **P1** has a crystallization ration lower than or equal to 30%.

### Polymer **P1**

Said polymer **P1** comprises recurring units derived from vinylidene fluoride ($CH_2=CF_2$). In a preferred embodiment, said polymer **P1** is selected from the group consisting of polyvinylidene fluoride homopolymers and copolymers based on polyvinylidene fluoride comprising at least one comonomer **M1** compatible with vinylidene fluoride. Polyvinylidene fluoride homopolymers having the above-mentioned crystallization ratio are usually highly branched PVDF homopolymers.

The comonomers compatible with vinylidene fluoride can be halogenated (fluorinated, chlorinated or brominated) or non-halogenated.

Said at least one comonomer **M1** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethylvinyl) ether and perfluoro(propyl vinyl) ether, perfluoro(1,3-dioxole), perfluoro(2,2-dimethyl-1,3-dioxole), monomers of formula $CF_2=CFOCF_2CF(CF_3)OCF_2CF_2X$ wherein X is $SO_2F$,

$CO_2H$, $CH_2OH$, $CH_2OCN$ or $CH_2OPO_3H$, monomers of formula $CF_2=CFOCF_2CF_2SO_2F$, monomers of formula $F(CF_2)nCH_2OCF=CF_2$ wherein n is 1, 2, 3, 4 or 5, monomers of formula $R^1CH_2OCF=CF_2$ wherein $R^1$ is hydrogen or $F(CF_2)m$ and m is 1, 2, 3 or 4; monomers of formula $R^2OCF=CH_2$ wherein $R^2$ is $F(CF_2)p$ and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

Examples of trifluoropropenes is in particular 3,3,3-trifluoropropene. Tetrafluoropropenes may be for example 2,3,3,3-tetrafluoropropene or 1,3,3,3-tetrafluoropropene. Pentafluoropropenes may be for example 1,1,3,3,3-pentafluoropropene or 1,2,3,3,3-pentafluoropropene. Perfluoroalkyl vinyl ethers are for example those of general formula Rf-O-CF=$CF_2$, Rf being an alkyl group, preferably a $C_1$ to $C_4$ alkyl group (preferred examples being perfluoropropyl vinyl ether and perfluoromethyl vinyl ether). Chlorofluoroethylene can denote either 1-chloro-1-fluoroethylene or 1-chloro-2-fluoroethylene. The 1-chloro-1-fluoroethylene isomer is preferred. Chlorotrifluoropropene is preferably 1-chloro-3,3,3-trifluoropropene or 2-chloro-3,3,3-trifluoropropene.

Said at least one comonomer **M1** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethylvinyl) ether and perfluoro(propyl vinyl) ether, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propene or mixtures thereof.

Said at least one comonomer **M1** may be selected from the group consisting of vinyl fluoride, tetrafluoroethylene, hexafluoropropylene, 3,3,3-trifluoropropene, 2,3,3,3-tetrafluoropropene, 1,3,3,3-tetrafluoropropene, hexafluoroisobutylene, perfluorobutylethylene, 1,1,3,3,3-pentafluoropropene, 1,2,3,3,3-pentafluoropropene, perfluoro(propylvinyl ether), perfluoro(methyl vinyl ether), perfluoro(ethylvinyl ether), trifluoroéthylène, bromotrifluoroethylene, chlorofluoroethylene, chlorotrifluoroethylene, chlorotrifluoropropene, ethylene and mixtures thereof.

Said polymer **P1** may also comprise non-halogenated monomers such as ethylene and/or acrylic or methacrylic acid comonomers.

Said polymer **P1** may contain at least 50 mol% of vinylidene fluoride, advantageously at least 60 mol% of vinylidene fluoride, preferably at least 70 mol% of vinylidene fluoride, more preferably at least 80 mol% of vinylidene fluoride, in particular at least 90 mol% of vinylidene fluoride. Preferably, said polymer **P1** may contain less than 50 mol% of said at least one comonomer **M1,** advantageously less than 45 mol% of said at least one comonomer **M1,** preferably less than 40 mol% of said at least one comonomer **M1,** more preferably less than 30 mol% of said at least one comonomer **M1,** in particular less than 25 mol% of said at least one comonomer **M1.** Preferably, said polymer **P1** has a molar content in said at least one comonomer **M1** greater than 0,5 mol%, preferably greater than 1 mol%, more preferably greater than 5 mol%, in particular greater than 10 mol%.

In a specific embodiment, said polymer **P1** contains from 70 mol% to 90 mol% of vinylidene fluoride and from 10 mol% to 30 mol% of said at least one comonomer **M1.**

In a more specific embodiment, said polymer **P1** comprise vinylidene fluoride recurring units and recurring units derived from said at least one comonomer **M1** compatible with vinylidene fluoride, said at least one comonomer **M1** being hexafluoropropylene. Preferably, said polymer **P1** may contain less than 50 mol% of hexafluoropropylene, advantageously less than 45 mol% of hexafluoropropylene, preferably less than 40 mol% of hexafluoropropylene, more preferably less than 30 mol% of hexafluoropropylene, in particular less than 25 mol% of hexafluoropropylene; and greater than 0,5 mol% of hexafluoropropylene, preferably greater than 1 mol% of hexafluoropropylene, more preferably greater than 5 mol%, in particular greater than 10 mol%.

In a particular embodiment, said polymer **P1** is a copolymer of vinylidene fluoride and hexafluoropropylene, wherein said polymer **P1** contain at least 50 mol% of vinylidene fluoride, advantageously at least 60 mol% of vinylidene fluoride, preferably at least 70 mol% of vinylidene fluoride, more preferably at least 80 mol% of vinylidene fluoride, in particular from 80 to 90 mol% of vinylidene fluoride, and less than 50 mol% of hexafluoropropylene, advantageously less than 40 mol% of hexafluoropropylene, preferably less than 30 mol% of hexafluoropropylene, more preferably less than 20 mol% of hexafluoropropylene, in particular from 10 to 20 mol% of hexafluoropropylene.

In a more particular embodiment, said polymer **P1** contains from 70 mol% to 90 mol% of vinylidene fluoride and from 10 mol% to 30 mol% of hexafluoropropylene.

In another embodiment, said polymer **P1** is a copolymer of vinylidene fluoride and tetrafluoroethylene. Preferably, said polymer **P1** may contain less than 25 mol% of tetrafluoroethylene, advantageously less than 20 mol% of tetrafluoroethylene, preferably less than 15 mol% of tetrafluoroethylene, more preferably less than 10 mol% of tetrafluoroethylene, in particular less than 5 mol% of tetrafluoroethylene; and greater than 0,5 mol% of tetrafluoroethylene, preferably greater than 1 mol% of tetrafluoroethylene.

In another embodiment, said polymer **P1** is a copolymer of vinylidene fluoride and chlorotrifluoroethylene. Preferably, said polymer **P1** may contain less than 25 mol% of chlorotrifluoroethylene, advantageously less than 20 mol% of chlorotrifluoroethylene, preferably less than 15 mol% of chlorotrifluoroethylene, more preferably less than 10 mol% of chlorotrifluoroethylene, in particular less than 5 mol% of chlorotrifluoroethylene; and greater than 0,5 mol% of chlorotrifluoroethylene, preferably greater than 1 mol% of chlorotrifluoroethylene.

In another embodiment, said polymer **P1** is a terpolymer of vinylidene fluoride, hexafluoropropylene and tetrafluoroethylene.

In one embodiment, said polymer **P1** may comprise monomer units bearing at least one of the following functions: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. The function is introduced by a chemical reaction which can be grafting or a copolymerization of the fluoromonomer with a monomer bearing at least one of said functional groups and a vinyl function capable copolymerizing with the fluoromonomer, according to techniques well known to a person skilled in the art.

According to one embodiment, said polymer **P1** may comprise recurring units bearing a carboxylic acid function which is a group of (meth)acrylic acid type chosen from acrylic acid, methacrylic acid, hydroxyethyl (meth)acrylate, hydroxypropyl (meth)acrylate and hydroxyethylhexyl (meth)acrylate. According to one embodiment, the units bearing the carboxylic acid function may additionally comprise a heteroatom chosen from oxygen, sulfur, nitrogen and phosphorus.

According to one embodiment, the functionality is introduced by means of the transfer agent used during the synthesis process. The transfer agent is a polymer of molar mass less than or equal to 20 000 g/mol and bearing functional groups chosen from the groups: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. One example of a transfer agent of this type is oligomers of acrylic acid. According to a preferred embodiment, the transfer agent is an oligomer of acrylic acid of molar mass less than or equal to 20 000 g/mol.

The content of functional groups of the polymer **P1** is at least 0.01 mol%, preferably at least 0.1 mol%, and at most 15 mol%, preferably at most 10 mol%.

In a preferred embodiment, the polymer **P1** preferably has melt viscosity of greater than 5 Pa.s, preferably of greater than 10 Pa.s, more preferably of greater than 15 Pa.s, according to the ASTM D-3835 method, measured at 232°C and 100 sec-1. Preferably, the polymer **P1** has a melt viscosity lower than 500 Pa.s, advantageously lower than 400 Pa.s, preferably lower than 300 Pa.s, more preferably lower than 250 Pa.s, in particular lower than 200 Pa.s according to the ASTM D-3835 method, measured at 232°C and 100 sec-1.

The polymer **P1** used in the invention can be obtained by known polymerization methods, such as emulsion or suspension polymerization. According to one embodiment, they are prepared by an emulsion polymerization process in the absence of a fluorinated surfactant.

The polymerization of the polymer **P1** results in a latex generally having a solids content of from 10% to 60% by weight, preferably from 10% to 50%, and having a volume-average particle size of less than 1 micrometre, preferably less than 1000 nm, preferably of less than 800 nm and more preferably of less than 600 nm. The volume-average size of the particles is generally at least 20 nm, preferably at least 50 nm, and advantageously the average size is within the range from 100 to 400 nm. The polymer particles can form agglomerates, the volume-average size of which is from 1 to 30 micrometres and preferably from 2 to 10 micrometres. Nicomp CW380 Particle Size Analyzer (light scattering) is used to measure the volume average particle size of the latex particles. The agglomerates can break up into discrete particles during the formulation and the application to a substrate.

According to some embodiments, the polymer **P1** (homopolymer or copolymers) are composed of biobased vinylidene fluoride. The term "biobased" means "resulting from biomass". This makes it possible to improve the ecological footprint of the membrane. Biobased vinylidene fluoride can be characterized by a content of renewable carbon, that is to say of carbon of natural origin and originating from a biomaterial or from biomass, of at least 1 atom%, as determined by the content of 14C according to Standard NF EN 16640. The term "renewable carbon" indicates that the carbon is of natural origin and originates from a biomaterial (or from biomass), as indicated below. According to some embodiments, the biocarbon content of the VDF can be greater than 5%, preferably greater than 10%, preferably greater than 25%, preferably greater than or equal to 33%, preferably greater than 50%, preferably greater than or equal to 66%, preferably greater than 75%, preferably greater than 90%, preferably greater than 95%, preferably greater than 98%, preferably greater than 99%, advantageously equal to 100%.

Liquid medium **L1**

Said liquid medium **L1** used in the present invention has an octanol-water partition coefficient greater than 2.

The octanol-water partition coefficient is a partition coefficient for the two-phase system consisting of n-octanol and water. It serves as a measure of the relationship between lipophilicity and hydrophilicity of a substance. The value is greater than one if a substance is more soluble in fat-like solvents such as n-octanol, and less than one if it is more soluble in water.

Said liquid medium **L1** comprises at least one solvent having an octanol-water partition coefficient greater than 2. Preferably, if the liquid medium **L1** comprises more than one solvent, said liquid medium, each of said solvents has an octanol-water partition coefficient greater than 2. If the liquid medium **L1** comprises more than one solvent and a solvent has an octanol-water partition coefficient lower than 2, then said solvent is present in the liquid medium in a mass content lower than 10% based on the total weight of said liquid medium **L1**.

In a preferred embodiment, said liquid medium **L1** comprises at least one solvent selected from the group consisting of esters of formula $R^1CO_2R^2$ wherein $R^1$ and $R^2$ are independently selected from the group consisting of $C_1$-$C_{15}$ alkyl, $C_6$-$C_{15}$ aryl, $C_3$-$C_{15}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

In a preferred embodiment, said liquid medium **L1** comprises at least one solvent selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

In a preferred embodiment, said liquid medium **L1** comprises at least one solvent selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols or mixtures thereof.

In a particular embodiment, said liquid medium **L1** comprises at least one solvent selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 8 carbon atoms; $C_8$-$C_{15}$ ketones, $C_6$-$C_{15}$ ethers, $C_8$-$C_{15}$ alcohols or mixtures thereof.

For example, hydrocarbons may be n-pentane, neopentane, n-hexane, 3-methylpentane, 2,2-dimethylbutane, 2,3-dimethylbutane, n-heptane, n-octane, n-nonane, n-decane, n-dodecane, n-tetradecane, hexene, heptane, octene, nonene, toluene, xylene, ethylbenzene, n-propylbenzene, trimethylbenzene, naphthalene, cyclopentane, cyclohexane, cyclooctane, methylcyclohexane, adamantane.

For example, $C_6$-$C_{15}$ ethers may be di-n-propyl ether, butylethyl ether, anisole, benzofuran, 2,3-dihydrobenzofuran, ethoxybenzene, 2-methylanisole, 3-methylanisole, 4-methylanisole, di-n-butyl ether, diisopropyl ether, ethylbenzyl ether, 2,6-dimethylanisole, phenylpropyl ether, diphenyl ether.

For example, $C_8$-$C_{15}$ alcohols may be heptanol, 2-ethylphenol, 4-ethylphenol, 2,4-dimethylphenol, 2,5-dimethylphenol, 2,6-dimethylphenol, 3,4-dimethylphenol, 3,5-dimethylphenol, 1-octanol, 2-octanol, 3-octanol, 4-octanol, 2-n-propylphenol, 4-n-propylphenol, 2-isopropylphenol, 2,3,6-trimethylphenol, 1-nonanol, napthtol, 4-n-butylphenol, 4-tert-butylphenol, 1-decanol, 1-dodecanol, diphenylmethanol, phenyl-2-methylphenylmethanol, phenyl-4-methylphenylmethanol.

For example, $C_8$-$C_{15}$ aliphatic ketones may be 2-octanone, propiophenone, 4-methylacetophenone, 2-nonanone, 5-methyl-2-octanone, 2-decanone, 4-isopropylacetophenone, cyclododecanone, benzophenone, 2-phenylacetophenone.

For example, esters as defined above may be butyl butanoate, methylpropyl butanoate, methylpropyl isobutanoate, methylpropyl tert-butanoate, methylpropyl cyclohexyl ester, methylpropyl 2-ethylhexyl ester, methylbutyl phenyl ester, pentyl pentanoate, hexyl butanoate, hexyl pentanoate, butyl hexanoate, pentyl hexanoate, methyl benzoate, ethyl benzoate

In a preferred embodiment, said liquid medium **L1** consists of one or more solvent(s) selected from the group consisting of esters of formula $R^1CO_2R^2$ wherein $R^1$ and $R^2$ are independently selected from the group consisting of $C_1$-$C_{15}$ alkyl, $C_6$-$C_{15}$ aryl, $C_3$-$C_{15}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

In a preferred embodiment, said liquid medium **L1** consists of one or more solvent(s) selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

In a preferred embodiment, said liquid medium **L1** consists of one or more solvent(s) selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols or mixtures thereof.

In a particular embodiment, said liquid medium **L1** consists of one or more solvent(s) selected from the group consisting of esters of formula $R^1CO_2R^2$ wherein $R^1$ and $R^2$ are independently selected from the group consisting of $C_1$-$C_{10}$ alkyl, $C_6$-$C_{10}$ aryl, $C_3$-$C_{10}$ cycloalkyl optionally substituted by hydroxyl groups with the proviso the solvent has at least 8 carbon atoms; $C_8$-$C_{15}$ ketones, $C_6$-$C_{15}$ ethers, $C_8$-$C_{15}$ alcohols or mixtures thereof.

In a more particular embodiment, said liquid medium **L1** consists of one or more solvent(s) selected from the group consisting of esters of formula $R^1CO_2R^2$

wherein $R^1$ and $R^2$ are independently selected from the group consisting of $C_2$-$C_8$ alkyl, $C_6$-$C_{10}$ aryl, $C_3$-$C_{10}$ cycloalkyl optionally substituted by hydroxyl groups with the proviso the solvent has at least 8 carbon atoms; $C_8$-$C_{15}$ ketones, $C_6$-$C_{15}$ ethers, $C_8$-$C_{15}$ alcohols or mixtures thereof.

Said liquid medium **L1** is anhydrous or substantially anhydrous. In the present invention, the term "anhydrous" refers to a mass content of water in said liquid medium L1 lower than 5000 ppm, preferably lower than 1000 ppm, more preferably lower than 500 ppm, most preferably lower than 100 ppm, in particular lower than 50 ppm, more in particular lower than 10 ppm. The term "substantially anhydrous" refers to a liquid medium containing of from 0,1 ppm to any of the above ranges of water, for example from 0,1 ppm to 10 ppm or from 0,1 ppm to 50 ppm or from 0,1 ppm to 100 ppm or from 0,1 ppm to 500 ppm or from 0,1 ppm to 1000 ppm or from 0,1 ppm to 5000 ppm.

Powdery electrode materials

Said composition comprises at least one powdery electrode material. Said at least one powdery electrode material is selected from oxide or sulfide inorganic compounds.

Said powdery electrode material may be selected from the group consisting of lithium alloy, a metal oxide, a carbon material such as graphite or hard carbon, silicon, a silicon alloy, and $Li_4TiO_{12}$.

Alternatively, said powdery electrode material may be selected from the group consisting of $LiCoO_2$, $Li(Ni,Co,Al)O_2$, $Li(1+x)$, $NiaMnbCoc$ (x represents a real number of 0 or more, a=0.8, 0.6, 0.5, or 1/3, b=0.1, 0.2, 0.3, or 1/3, c=0.1, 0.2, or 1/3), $LiNiO_2$, $LiMn_2O_4$, $LiCoMnO_4$, $Li_3NiMn_3O_3$, $Li_3Fe_2(PO_4)_3$, $Li_3V_2(PO_4)_3$, a different element-substituted Li Mn spinel having a composition represented by $Li_{1+x}Mn_{(2-x-y)}M_yO_4$, wherein M represents at least one metal selected from Al, Mg, Co, Fe, Ni, and Zn, x and y independently representing a real number between 0 to 2, lithium titanate $Li_xTiO_y$ - x and y independently representing a real number between 0 to 2, and a lithium metal phosphate having a composition represented by $LiMPO_4$, M representing Fe, Mn, Co, or Ni.

Alternatively, said powdery electrode material may be selected from the group consisting of $LiO_{0.35}La_{0.55}TiO_3$, $La_{(2/3-x)}Li_{(3x)}TiO_3$, $Li_3PO_4$, $Li_x-PO_{(4-y)}N_y$, $LiNb_{(1-x)}Ta_{(x)}WO_6$, $Li_7La_3Zr_2O_{12}$, $Li_{(1+x)}Al_{(x)}Ti_{(2-x)}(PO_4)_3$, $Li_{(1+x)}Al_{(x)}Ge_{(2-x)}(PO_4)_3$, and $LiNbO_2$ wherein X>0 and Y>0

Alternatively, said powdery electrode material may be selected from the group consisting of

- Metallic polysulfide $M_xS_y$ wherein x is an integer of from 1 to 3 and y is an integer of from 1 to 10 and M is selected from the group consisting of alkali metal, alkaline earth metal such as Mg or Ca, transition metal, metal of group 13 to 17 of the periodic table, or mixtures thereof; preferably M is selected from the group consisting of Li, Na, K, Mg, Zn, Cu, Ti, Ni, Co, Fe and Al ; in particular metallic polysulfide is selected from the group consisting of $Li_2S_6$, $Li_2S_7$, $Li_2S_8$, $Li_2S_9$, $Li_2S_{10}$, $Na_2S_6$, $Na_2S_7$, $Na_2S_8$, $Na_2S_9$, $Na_2S_{10}$, $K_2S_6$, $K_2S_7$, $K_2S_8$, $K_2S_9$, or $K_2S_{10}$ ;
- lithium tin phosphorous sulfide (« lsps ») such as $Li_{10}SnP_2S_{12}$ ;
- Lithium phosphorous sulfide (« lps ») of formula $(Li2S)x(P2S5)y$, wherein x+ y=1 and $0 \leq x \leq 1$, $Li_7P_3S_{11}$, $Li_7PS_6$, $Li_4P_2S6$, $Li_{9.6}P_3S_{12}$ and $Li_3PS_4$;
- Doped Lps such as $Li_2CuPS_4$, $Li_{1+2x}Zn_{1-x}PS_4$, wherein $0 \leq x \leq 1$, $Li_{3.33}Mg_{0.33}P_2S_6$, et $Li_{4-3x}Sc_xP_2S_6$, wherein $0 \leq x \leq 1$ ;
- Lithium phosphorous sulfide oxygen ("LPSO") of formula $Li_xP_yS_zO$, wherein $0,33 \leq x \leq 0,67$, $0,07 \leq y \leq 0,2$, $0,4 \leq z \leq 0,55$, $0 \leq w \leq 0,15$ ;
- Lithium phosphorous sulfide ("lxps") wherein x is Si, Ge, Sn, As or Al, such as $Li_{10}GeP_2S_{12}$ or $Li_{10}SiP_2S_{12}$ ;
- Lithium phosphorous sulfide oxygen ("LXPSO") wherein x is Si, Ge, Sn, As or Al ;
- Lithium silicon sulfide ("LSS") such as $Li_2SiS_3$, $Li_2S-P_2S_5$- $SiS_2$, $Li_2S-P_2S_5-SiS_2-LiCl$, $Li_2S-SiS_2-P_2S_5$, $Li_2S-SiS_2-P_2S_5-LiI$, $Li_2S-SiS_2-LiI$, $Li_2S-SiS_2$, $Li_{9.54}Si_{1.74}P_{1.44}S_{11.7}Cl_{0.3}$, and $Li_2S-SiS_2-Al_2S_3$;
- Lithium boron sulfide such as $Li_3BS_3$ or $L_2S-B_2S_3-LiI$ ;
- Lithium tin sulfide or lithium arsenide sulfide such as $Li_{0.8}Sn_{0.8}S_2$, $Li_4SnS_4$, $Li_{3.833}Sn_{0.833}As_{0.166}S_4$, $Li_3AsS_4-Li_4SnS_4$, $Li_3AsS_4$; and
- $Li_4PS_4Cl$, $Li_{15}P_3S_{16}Cl_3$, $Li_7P_2S_8Cl$, and $Li_7P_2S_8I$ ;
- Material of formula $Li_6PS_5Y$ wherein Y is Cl, Br or I such as $Li_{6-x}PS_{5-x}Y_{1+x}$, wherein $0 \leq x \leq 0,5$ ; preferably $Li_6PS_5Cl$ ;
- $Li_2S-GeS_2-ZnS$, $Li_3SbS_4$, $Na_3PS_4$, $Na_{10}SnP_{12}S_{12}$, and $Na_{11}Sn_2PS_{12}$;
- And mixtures thereof.

Conductive additives

Said composition may also comprise at least one conductive additive. The conductive additives comprise of one or more material that can improve conductivity. Some examples include carbon blacks such as acetylene black, Ketjen black; carbon fibers such as carbon nanotube, carbon nanofiber, vapor growth carbon fiber; metal powders such as SUS powder, and aluminum powder.

Lithium salt

Optionally said composition may also comprise at least one alkali metal salt. Said alkali metal salt may be selected from the group consisting of $LiCF_3SO_3$, $LiPF_6$, $LiClO_4$, $LiBF_4$, $LiB(C_2O_4)_2$, $LiN(SO_2F)_2$, $LiN(SO_2CF_3)_2$, $LiN(SO_2C_2F_3)_2$, $LiN(SO_2C_2F_5)_2$,

$LiN(SO_2F)(SO_2CF_3)$, $LiN(SO_2F)(SO_2C_2F_5)$, $LiN(SO_2CF_3)(SO_2C_2F_5)$,$LiAsF_6$, $LiBF_2C_2O_4$, $LiNO_3$, $LiPF3(CF_2CF_3)_3$, LiBETI, LiTDI, NaTDI, KTDI, $NaClO_4$, $KClO_4$, $NaPF_6$, $KPF_6$, $NaBF_4$, $KBF_4$, $NaAsF_6$, $KAsF_6$, $NaCF_3SO_3$, $KCF_3SO_3$, $NaN(CF_3SO_2)_2$, $KN(CF_3SO_2)_2$, $NaN(SO_2C_2F_5)_2$, $NaN(SO_2F)(SO_2CF_3)$, $NaN(SO_2F)(SO_2C_2F_5)$, $NaN(SO_2CF_3)(SO_2C_2F_5)$, $KN(SO_2C_2F_5)_2$, $KN(SO_2F)(SO_2CF_3)$, $KN(SO_2F)(SO_2C_2F_5)$, $KN(SO_2CF_3)(SO_2C_2F_5)$, or mixtures thereof. Preferably, Said alkali metal salt may be selected from the group consisting of $LiCF_3SO_3$, $LiPF_6$, $LiClO_4$, $LiBF_4$, $LiB(C_2O_4)_2$, $LiN(SO_2F)_2$, $LiN(SO_2CF_3)_2$, $LiN(SO_2C_2F_3)_2$, $LiN(SO_2C_2F_5)_2$, $LiN(SO_2F)(SO_2CF_3)$, $LiN(SO_2F)(SO_2C_2F_5)$, $LiN(SO_2CF_3)(SO_2C_2F_5)$, $LiAsF_6$, $LiBF_2C_2O_4$, $LiNO_3$, $LiPF3(CF_2CF_3)_3$, LiBETI, LiTDI, or mixture thereof.

Process for preparing an electrode and electrode

In a second aspect, the present invention provides a process for preparing an electrode. Said process preferably comprises the steps of:

    i. Providing a composition according to the present invention;
    ii. Processing said composition to provide a film.

In a preferred embodiment, step ii) is carried out by casting said composition on a substrate, preferably a current collector, and drying the resulting component to form said film on said substrate. The drying step can be carried for 5 min to 24h at a temperature of from 50°C to 180°C. The drying step can be carried out at atmospheric pressure or under reduced pressure.

As mentioned above, the liquid medium **L1** has a very low moisture absorbance. Hence, the film prepared according to the present process has a content of liquid medium **L1** of from 0.1 ppm to 1% by weight based on the total weight of the film.

Preferably, said film has a porosity of from 10% to 75%, more preferably from 20% to 60%, in particular from 30% to 50%.

The porosity of the film is measured according to the publication M. CAI, Nature Communications, 10, 2019, 4597:

$$p = \frac{V_{ER} - V_{denseER}}{V_{ER}}$$

wherein $V_{ER}$ represents the real volume of the film and calculated by multiplying the surface of the film with the thickness of the film. $V_{denseER}$ represents the volume occupied by each constituent without any porosity and calculated with the following formula:

$$V_{denseER} = \sum \frac{m_i}{d_i}$$

$V_{denseER}$ is the sum of the volume occupied by each constituent of the film.

In another aspect, the present invention provides an electrode comprising a film made of a composition according to the present invention. The electrode can be a positive electrode or a negative electrode. The thickness of the electrode is from 50 μm to 150 μm. The density of the electrode is from 2.0 g/cm3 to 4 g/cm3. The loading of the electrode is from 8 mg/cm2 to 15 mg/cm2.

In another aspect, the present invention provides an all solid-state battery comprising an electrode according to the present invention and a solid electrolyte.

**Examples**

Preparation Example 1

Into an 80-gallon stainless steel reactor was charged, 345 lbs of deionized water, 90 g non-ionic surfactant and 0.2 lbs of potassium acetate. Following evacuation, agitation was begun at 23 rpm, the reactor was heated. After reactor temperature reached the desired set point of 100°C., the VDF and HFP monomer were introduced to reactor with HFP ratio of 62 wt % of total monomers. Reactor pressure was then raised to 650 psi by charging approximately 35 lbs total monomers into the reactor. After reactor pressure was stabilized, 1.0 lbs of initiator solution made of 1.0 wt % potassium persulfate and 1.0 wt % sodium acetate were added to the reactor to initiate polymerization. Upon initiation, the ratio of HFP to VDF was so adjusted to arrive at 33% HFP to total monomers in the feed. The rate of further addition of the initiator solution was also adjusted to obtain and maintain a final combined VDF and HFP polymerization rate of roughly 100 pounds per hour. The VDF and HFP copolymerization was continued until approximately 160 pounds monomers were introduced in the reaction mass. The HFP feed was stopped but VDF feed continued till approximately 180 lbs of total monomers were fed to the reactor. The VDF feed was stopped and the batch was allowed to react-out at the reaction temperature to consume residual monomer at decreasing pressure. After 40 minutes, the initiator feed and agitation were stopped and the reactor was cooled, vented and the latex recovered. Solids in the recovered latex were determined by gravimetric technique and were about 32 wt% and melt viscosity of about 38 kp according to ASTM method D-3835 measured at 230 °C and 100 sec-1. The melting temperature of resin was measured in accordance with ASTMD3418 and was found to be not detectable during the second heat and there was no detectable heat of fusion. The weight average particle size was measured by NICOMP laser light scattering instrument and was found to be about 220 nm.

Example 1

6 g of VDF-HFP copolymer prepared according to preparation example 1 and having a crystallization ratio of 5% was dissolved in 44 g of butyl butyrate (boiling point 166°C). The solution was mixed in a mix rotor at 50°C, 110 rpm, for 6 hours to ensure complete dissolution. 1.68 g of Super P(Timcal) was measured into a 125 ml HDPE container. 17.5 g of VDFHFP copolymer solution was added to the container. The lid of the container was closed and mixed in ARE-310 mixer (Thinky) at 2000 rpm for 2 min., then cooled in water bath. Mixing at 2000 rpm for 2 min. then cooling in water bath was repeated two more times. 38.22 g of LCO was added to the slurry then mixed at 2000 rpm for 1 min. in ARE-310. The container was cooled in water bath then mixed again at 2000 rpm for 1 min. in ARE-310. 2.6 g of butyl butyrate was added to the slurry then mixed at 2000 rpm for 1 min. and cooled in water bath. Finally, step of adding 3 g of butyl butyrate, mixing in ARE-310 at 2000 rpm. 1 min., and cooling in water bath for 1 min. was repeated a total of 5 times to obtain the final slurry. The slurry was cast on aluminum foil at 8 mils wet thickness and dried at 120°C, 30 min. Electrode with 2.81 g/cm3 density and 14.75 mg/cm2 loading was prepared. The prepared electrode structure was used to prepare a battery with PE separator and Li metal as anode. PE separator was sandwiched between the electrode and Li metal in a glove box to obtain a cell structure. The cell structure was put into a container, electrolyte was injected and sealed to obtain a coin cell. The prepared coin cell was charged at C/10 (Constant Current) to 4,2V and 25°C then discharged at C/10 to 3 V and 25°C. Discharge capacity was 1.729 mAh.

Example 2

6 g of copolymer VDF-HFP having a crystallization ratio of 10% was dissolved in 14.3 g of butyl butyrate. The solution was mixed in a mix rotor at 50°C, 110 rpm, for 6 hours to ensure complete dissolution. 1.68 g of Super P(Timcal) was measured into a 125 ml HDPE container. 5 g of Kynar(R) ADS solution was added to the container. The lid of the container was closed and mixed in ARE-310 mixer (Thinky) at 2000 rpm for 2 min., then cooled in water bath. Mixing at 2000 rpm for 2 min. then cooling in water bath was repeated two more times. Step of adding 3 g of butyl butyrate, mixing in ARE-310 at 2000 rpm. 1 min., and cooling in water bath for 1 min. was repeated a total of 5 times. 38.22 g of LCO was added to the slurry then mixed at 2000 rpm for 1 min. in ARE-310. The container was cooled in water bath then mixed again at 2000 rpm for 1 min. in ARE-310. 5 g of butyl butyrate was added to the slurry then mixed at 2000 rpm for 1 min. and cooled in water bath. The slurry was cast on aluminum foil at 5 mils wet thickness and dried at 120°C, 30 min. Electrode with 3.19 g/cm3 density and 14.02 mg/cm2 loading was prepared. The prepared electrode structure was used to prepare a battery with PE separator and Li metal as anode. PE separator was sandwiched between the electrode and Li metal in a glove box to obtain a cell structure. The cell structure was put into a container, electrolyte was injected and sealed to obtain a coin cell. The prepared coin cell was charged at C/10 (Constant Current) to 4,2 V and 25°C then discharged at C/10 to 3 V and 25°C. Discharge capacity was 1.349 mAh.

Comparative example 1

2.5 g of Kynar(R) HSV900 (40 % crystallization ratio) was added to 47.5 g of butyl butyrate. The dissolution is not sufficient even after 24 hours of mixing at 50°C, 110 rpm in mix rotor.
As clearly demonstrated by the present examples, the liquid medium **L1** as defined in the present invention allows the dissolution of fluorinated polymer having a crystallization ratio lower than 30% whilst fluorinated polymer having a crystallization ratio of 40% or greater cannot be dissolved in said liquid medium. Furthermore, the liquid medium **L1** is less moisture absorbent allowing a better battery efficiency.

**Claims**

1. Composition comprising at least one fluorinated polymer **P1**, a liquid medium **L1,** at least one powdery electrode material, optionally at least one conductive additive, and optionally at least one alkali metal salt; wherein said at least one fluorinated polymer **P1** has a crystallization ratio lower than or equal to 30% and said liquid medium **L1** has an octanol-water partition coefficient greater than 2.

2. Composition according to the previous claim wherein said at least one fluorinated polymer **P1** is selected from the group consisting of poly(vinylidene fluoride) homopolymers and copolymers of vinylidene difluoride with at least one comonomer **M1** selected from the group consisting of vinyl fluoride, tetrafluoroethylene, hexafluoropropylene, 3,3,3-trifluoropropene, 2,3,3,3-tetrafluoropropene, 1,3,3,3-tetrafluoropropene, hexafluoroisobutylene, perfluorobutylethylene, 1,1,3,3,3-pentafluoropropene, 1,2,3,3,3-pentafluoropropene, perfluoro(propyl vinyl ether), perfluoro(methyl vinyl ether), perfluoro(ethyl vinyl ether), trifluoroéthylène, bromotrifluoroethylene, chlorofluoroethylene, chlorotrifluoroethylene, chlorotrifluoropropene, ethylene and mixtures thereof.

3. Composition according to any one of the preceding claims wherein said liquid medium **L1** comprises at least one solvent selected from the group consisting of esters of formula $R^1CO_2R^2$ wherein $R^1$ and $R^2$ are independently selected from the group consisting of $C_1$-$C_{15}$ alkyl, $C_6$-$C_{15}$ aryl, $C_3$-$C_{15}$ cycloalkyl optionally substituted by hydroxyl groups with the proviso the solvent has at least 7 carbon atoms; $C_8$-$C_{15}$ ketones, $C_6$-$C_{15}$ ethers, $C_8$-$C_{15}$ alcohols and hydrocarbon or mixtures thereof.

4. Composition according to any one of the preceding claims wherein said liquid medium **L1** is anhydrous or substantially anhydrous.

5. Composition according to any one of the previous claims wherein said at least one powdery electrode material is selected from oxide or sulfide inorganic compounds.

6. Composition according to any one of the previous claims wherein said composition contains at least one conductive agent selected from the group consisting of carbon blacks, graphites, which are natural or synthetic, carbon fibers, carbon nanotubes, metal fibers and powders, and conductive metal oxides.

7. Process for preparing an electrode comprising the steps of:

    i. Providing a composition according to any one of claims 1 to 6;
    ii. Processing said composition to provide a film.

8. Process according to the previous claim wherein step ii) is carried out by casting said composition on a substrate, preferably a current collector, and drying the resulting component to form said film on said substrate.

9. Process according to any one of the previous claims 7 or 8 wherein the film has a content of liquid medium **L1** of from 0.1 ppm to 1% by weight based on the total weight of the film.

10. Electrode comprising a film made of a composition according to any one of claims 1 to 6.

11. All solid-state battery comprising an electrode according to the previous claim and a solid electrolyte.

Europäisches Patentamt

European Patent Office

Office européen des brevets

## EUROPEAN SEARCH REPORT

Application Number

EP 23 16 7920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/271293 A1 (YAMADA TAKAYA [JP] ET AL) 25 August 2022 (2022-08-25) | 1-5,7-11 | INV.<br>H01M4/139 |
| Y | * par. 257; page 12 table 1; page 13, table 2 * | 6 | H01M4/62<br>H01M10/0562<br>H01M4/88 |
| | ----- | | |
| X | US 2016/028108 A1 (HASHIMOTO YUICHI [JP] ET AL) 28 January 2016 (2016-01-28)<br>* claim 1; page 9, table 1; example 3; par. 86-88, 102-106 * | 1-3,7,8, 10,11 | |
| | ----- | | |
| Y | WO 2023/285511 A1 (SOLVAY SPECIALTY POLYMERS IT [IT])<br>19 January 2023 (2023-01-19)<br>* par. 102, 105 * | 6 | |
| | ----- | | |

TECHNICAL FIELDS
SEARCHED     (IPC)

H01M

The present search report has been drawn up for all claims

| Place of search | Date of completion of the search | Examiner |
|---|---|---|
| Munich | 14 September 2023 | Bettio, Andrea |

EPO FORM 1503 03.82 (P04C01)

## ANNEX TO THE EUROPEAN SEARCH REPORT
## ON EUROPEAN PATENT APPLICATION NO.

EP 23 16 7920

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2023

| Patent document cited in search report | | Publication date | Patent family member(s) | | Publication date |
|---|---|---|---|---|---|
| US 2022271293 | A1 | 25-08-2022 | CN 114175314 | A | 11-03-2022 |
| | | | EP 4006067 | A1 | 01-06-2022 |
| | | | JP 7260819 | B2 | 19-04-2023 |
| | | | JP WO2021015230 | A1 | 09-12-2021 |
| | | | KR 20220024597 | A | 03-03-2022 |
| | | | TW 202114276 | A | 01-04-2021 |
| | | | US 2022271293 | A1 | 25-08-2022 |
| | | | WO 2021015230 | A1 | 28-01-2021 |
| US 2016028108 | A1 | 28-01-2016 | CN 105304904 | A | 03-02-2016 |
| | | | JP 5975072 | B2 | 23-08-2016 |
| | | | JP 2016025025 | A | 08-02-2016 |
| | | | US 2016028108 | A1 | 28-01-2016 |
| WO 2023285511 | A1 | 19-01-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020197536 A

- EP 1621573 A

**Non-patent literature cited in the description**

- **M. CAI.** *Nature Communications,* 2019, vol. 10, 4597